(19) Europäisches Patentamt
European Patent Office
Office européen des brevets

(11) Publication number: **0 413 375 A1**

# (12) EUROPEAN PATENT APPLICATION

(21) Application number: **90201937.1**

(22) Date of filing: **17.07.90**

(51) Int. Cl.5: **C08G 63/68**, C08G 69/44, C09K 19/38, C08K 5/34

(30) Priority: **21.07.89 EP 89201919**

(43) Date of publication of application: **20.02.91 Bulletin 91/08**

(84) Designated Contracting States: **AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Vriesema, Bindert Klaas**
**Burg. Luytenstraat 47**
**NL-6151 GE Sittard(NL)**

## (54) Thermotropic polyesters.

(57) Thermotropic polyesters of units of diacids, hydroxy acids, diols, and optionally polyestercarbonate-, polyesteramide-, polyssterimide- and/or polyester anhydride-structures, characterized in that a part of the diol component(s) is replaced by one or more dervative(s) of the following formula (I)

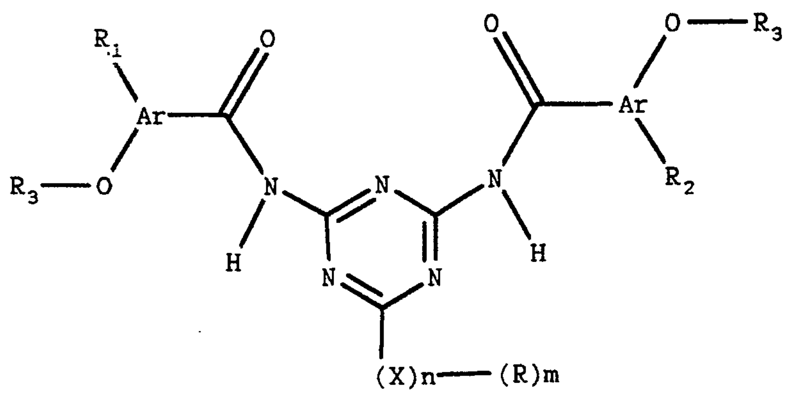

(I)

wherein
R, $R_1$ and $R_2$ which are the same or different, are hydrogen, alkyl radicals having 1 to 4 carbon atoms, cycloalkyl radicals having 3 to 6 carbon atoms, or aryl radicals, optionally substituted by one or more alkyl radicals having 1 to 4 carbon atoms, or substituted by halogen atoms like chlorine, bromine and/or fluorine,
$R_3$ is hydrogen or an akyl radical having 1 to 4 carbon atoms,
n is 0 or 1 and if n = 1, then
X is -O-, -S-, or -N =, whereas m = 1 or 2;
Ar is phenyl, biphenyl or naphthyl.
These polyesters can be produced from relatively cheap starting materials and possess excellent physical properties.

EP 0 413 375 A1

## THERMOTROPIC POLYESTERS

The present invention is directed to thermotropic polyesters of units of diacids, hydroxy acids, diols, and optionally polyestercarhonate-, polyesteramide-, polyesterimide- and/or polyester anhydride-structures.

Thermotropic polyester are known from many references. These polymers which are also known as thermotropic liquid crystal polymers (LCP) are polymers which are liquid crystalline (i.e., anistropic) in the melt phase.

In EP 0 117 098, especially on the pages 3 to 6, known thermotropic polyesters are explained in more detail and additionally references are quoted in which they are disclosed.

The known thermotropic polyesters roughly can be devided into three categories I, II and III.

The thermotropic polyesters of the category I have heat distortion temperatures (HDT) of more than 250¤C, melting points betweenapproximately 340 and 420¤C, E-moduli of 10000 to 15.000 N/mm$^2$, (ASTM D 790, 3,2 mm) and consist of wholly aromatic and wholly linear units.

The thermotropic polyesters of the category II have heat distortion temperatures of approximately 200¤C, melting points of approximately 280 to 320¤C, E-moduli which are similar to those of the polyesters of the category I, and consist wholly aromatic units which are partially linear or consist of partially aromatic units which are either linear or partially linear.

The thermotropic polyesters of the category III have heat distortion temperatures of approximately 150¤C, melting points of approximately 250¤C, F-moduli of approximately 5000 N/mm$^2$, and consist of units which are non-aromatic or only partially aromatic and non-linear or only partially linear.

The starting materials for preparing the known thermotropic polyesters of the category I are the most expensive ones, whereas the starting materials of preparing the thermotropic polyesters of the category III are the cheapest ones and those for preparing the thermotropic polyesters of the category II are in between.

The object of the present invention is to provide thermotropic polyesters having the characteristics of polyesters of the category I, however, being mainly composed of units of starting materials as used for preparing polyesters of the categories II and/or III.

The present invention is based on the discovery that thermotropic polyesters of units of diacids, hydroxy acids, diols, and optionally polyestercarbonate-, polyesteramide-, polyesterimide- and polyester anhydride-structures producing monomers in which a part of the diol component(s) is replaced by one or more derivative(s) of the following formula (I)

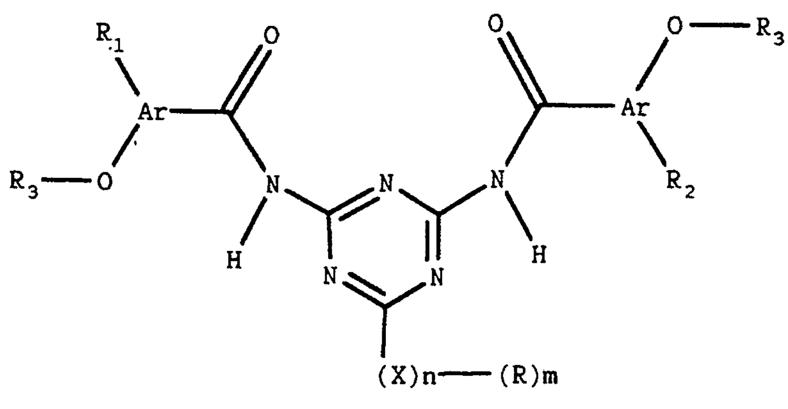

wherein

R, $R_1$ and $R_2$ which are the same or different, are hydrogen, alkyl radicals having 1 to 4 carbon atoms, cycloalkyl radicals having 3 to 6 carbon atoms, or aryl radicals, optionally suhstituted by one or more alkyl radicals having 1 to 4 carbon atoms, or aryl radicals substituted by halogen atoms like chlorine, bromine and/or fluorine, $R_3$ is hydrogen or an alkyl radical having 1 to 4 carbon atoms,

n is 0 or 1 and if n = 1, then

X is -O-, $-SO_2-$, or -N =, and m = 1 or 2;

Ar is phenyl, biphenyl or naphthyl,

have properties which are comparable to those of thermotropic polyesters of the above mentioned category

I.

Preferably the units of the derivative(s) of the formule (I) replace(s) 0,5 to 50% by weight, more preferably 0,5 to 20% by weight and more preferably 1 to 10% by weight of the units of the diol(s).

As derivates of the formule (I) those in which R is methyl or phenyl, $R_1$ and $R_2$ are hydrogen, n is O and Ar is phenyl, or, if n is 1, X is -N= are preferred. The percentage of units derived from the diol, diacid and hydroxy acid components can be any amounts which result in a polyester having the properties comparable to properties of category I polyesters.

It is preferable, but not necessary, that

(a) the amount of the units derived from the diol component(s) is 5 to 40 wt.%, more preferably 5 to 30 wt.% and most preferably 10 to 30 wt.% of the total weight of the polyester,

(b) the amount of the units derived of the diacid component(s) is 5 to 40 wt.%, more preferably 5 to 30 wt.% and most preferably 10 to 30 wt.% of the total weight of the polyester, and

(c) the amount of the units derived from the hydroxy acid component(s) is 20 to 90 wt.%, more preferably 20 to 70 wt.% and most preferably 40 to 60 wt.% of the total weight of the polyester.

Additionlly, it is preferred, but not necessary, that the amounts of units of the diol component(s) equivals the amounts of the diacid componet(s).

Preferred thermotropic polyesters according to the preent invention showing outstanding physical properties as mentioned above include, but are not limited to those comprising at least:

(a) units having an oxy group and a carboxyl group,

(b) units having two oxy groups, and

(c) units having two carboxyl groups. Examples for polyesters having these structures can be found in EP 0 117 098.

Units having an oxy group and a carboxyl group correspond to the formula

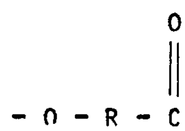

wherein R is a radical containing at least one aromatic ring, for example

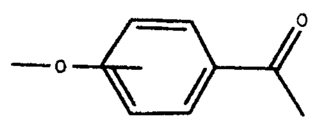

(II)

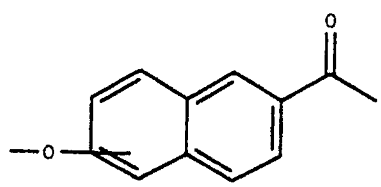

(IIa)

Preferably the polyesters according to the invention contain oxybenzoyl units of the formula (II). These units can be obtained by any suitable means, and generally are obtained from hydroxybenzoic acid or derivatives thereof. Oxyhenzoyl units like (II) may be para-or meta-substituted. Mixtures of para- and meta-substituted oxybenzoyl units of the formula (II) may also be used. Preferably, the units like (II) are p-suhstituted. One or more of the hydrogen atoms in the aromatic ring may be substituted by an alkyl or alkoxy group having 1 to 4 carbon atoms, by halogen, like chlorine, bromine and/or fluorine and/or by a phenyl group, which may be substituted in a similar manner. More preferably the oxybenzoyl units are derived from p-hydroxybenzoic acid. The polyester preferably contains 20 to 70 wt.% oxybenzoyl units.

The formula of the units having two oxy groups is usually

- O - R - O -

wherein R is a radical containing at least one aromatic ring, several non-limiting examples of which are:

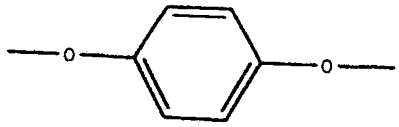

(IIIa)

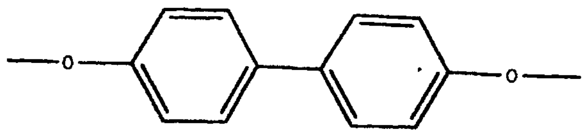

(IIIb)

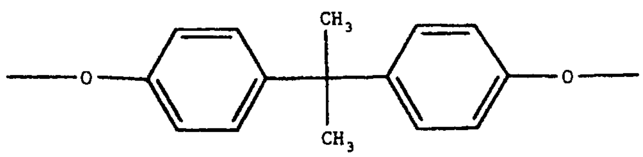

(IIIc)

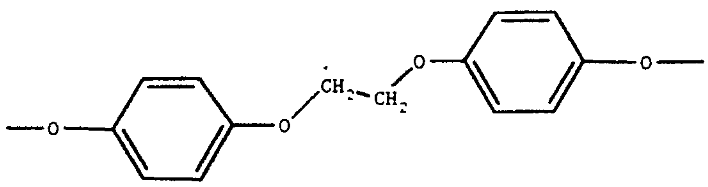

(IIId)

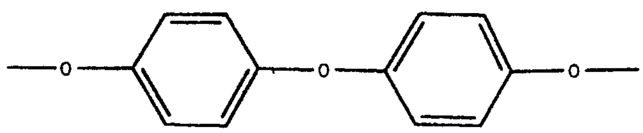

(IIIe)

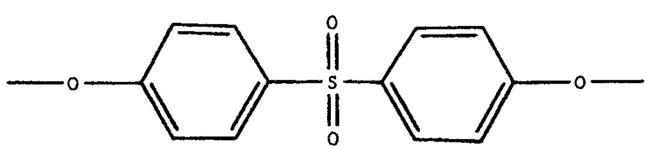

(IIIf)

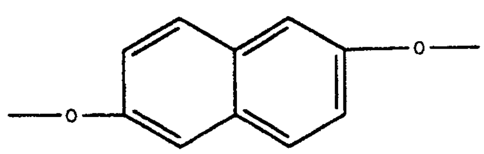

(IIIg)

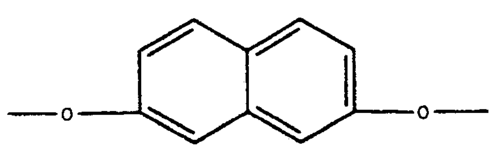

(IIIh)

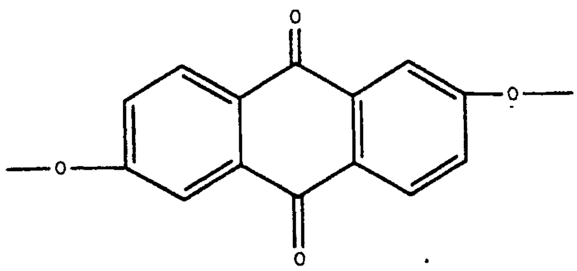

(IIIi)

Naturally, the thermotropic polyesters according to the present invention may also contain mixtures of the aforementioned units. Preferably the polyesters according to the invention contain dioxyphenyl (IIIa) and/or diphenoxy (IIIb) groups, particularly biphenoxy groups having the formula (IIIb). Polyesters containing this group can be obtained from bispenols, preferably from p,p′-bisphenol. One or more hydrogen atoms in the aromatic rings may he suhstituted by an alkyl and/or alkoxy group, a halogen atom, like a chlorine, bromine or fluorine atom, or a phenyl group which in turn can be substituted in the same manner. Preferably, but not necessarily the polyester contains 5 to 40 wt.% of units having two oxy groups.

Thermotropic polyesters according to the present invention containing aromatic units havino 2 carboxyl groups can be obtained from aromatic dicarbcxylic acids or from esters thereof, several non-limiting examples of which include terephthalic acid, isophthalic acid, 2,6-napthalenedicarboxylic acid, 2,7-naphthalenedicarboxylic acid, bibenzoic acid, 4,4-dicarboxylic diphenylsulfon, 4,4-dicarboxylic diphenylethane, 4,4-dicarboxylic diphenylsulfide, 4,4-dicarboxylic diphenylether, 4,4-dicarboxylic diphenylmethane, 4,4-dicarboxylic diphenoxyethane, 2,2-bis(4-carboxyphenyl)propane. Preferably, the aromatic units having two carboxyl groups are obtained from therephthalic acid, isophthalic acid and/or derivatives thereof, for example esters thereof. One or more hydrogen atoms in the aromatic rings may be substitutued by an alkyl and/or alkoxy group having 1 to 4 carbon atoms, a halogen, like chlorine, bromine or fluorine, and/or a penyl group which in turn may be substituted in a similar manner. Terephthalic acid and/or isophthalic acid are the most preferred diacids.

Besides of the aforementioned preferred diol-, diacid- and hydroxyacid components all such components as known for being used to prepare thermotropic polyesters may be used.

The thermotropic polyesters according to the invention optionally may comprise polyesteramide units. These can be derived from any of the known polyesteramide forming comonomers, like p-aminobenzoic acid, p-aminophenol, p-N-methylaminonhenol, p-phenylenediamine, n-methyl-p-phenylenediamine, N,N-dimethyl-phenylenediamine, m-aminophenol, 4-amino-l-naphtol, 4-amino-4-hydroxydiphenyl, 4-amino-4-hydroxyphenyl ether, 4-amino-4-hydroxydiphenylmethane, 4-amino-4-hydroxy-diphenylethane, 4-amino-4-hydroxydiphenyl sulphone, 4-amino-4-hydroxydiphenyl sulphide, 4,4-diaminophenyl sulphide, 4,4-diaminodiphenyl sulphone, 2,5-diaminotoluene, 4,4-ethylenediamine, 4,4-diaminodiphenoxyethane, 4,4-diaminodiphenylmethane, 4,4-diaminodiphenyl ether. In this connection reference is made to US patent 4 341 688.

Besides the above mentioned units the polymers according to the invention may contain also sulphone-, urethane-, carbonate-, imide-, ether-, keto-, urea-, sulphide-, azo-, anhydride- and/or thioester-groups. If present, such structures comprise to maximum 10 wt.% of the total amount of (a) to (c).

The derivatives of the above formula (I) are known compounds which are obtainable by methods known per se (see for example "Chemistry of Heterocyclic Compounds - s-Triazine derivatives", E.M. Smolin and L. Rapoport, Interscience publishers, J.N.C., New York 1959).

Specific examples for compounds of the formula (I) wherein n is 0, which are not intended to limit the scope of the invention, are the following:

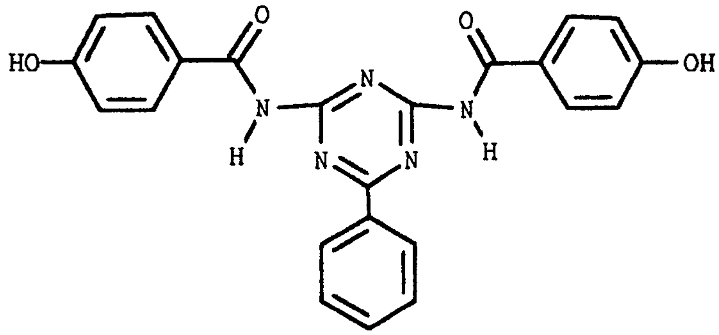

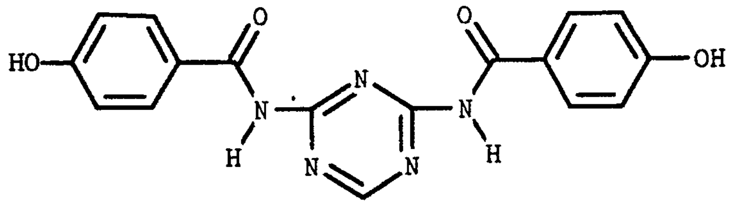

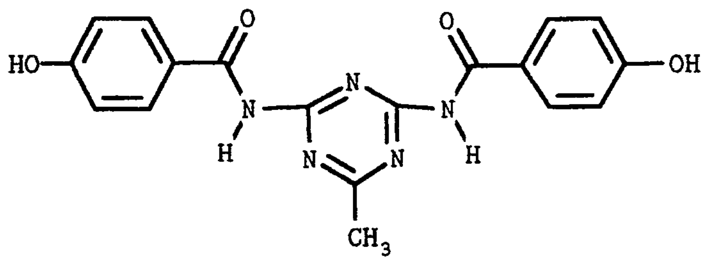

Representative example for compounds of the formula (I) wherein n is 1, and X is -O- is the following:

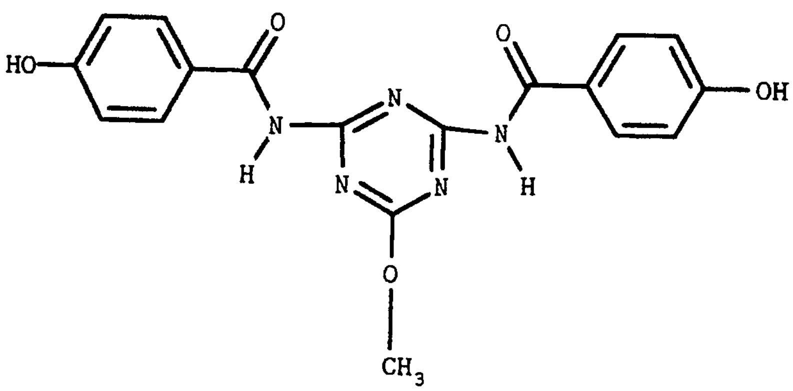

Illustrative example for compounds of the formula (I) wherein n is 1 and X is -S- is the following:

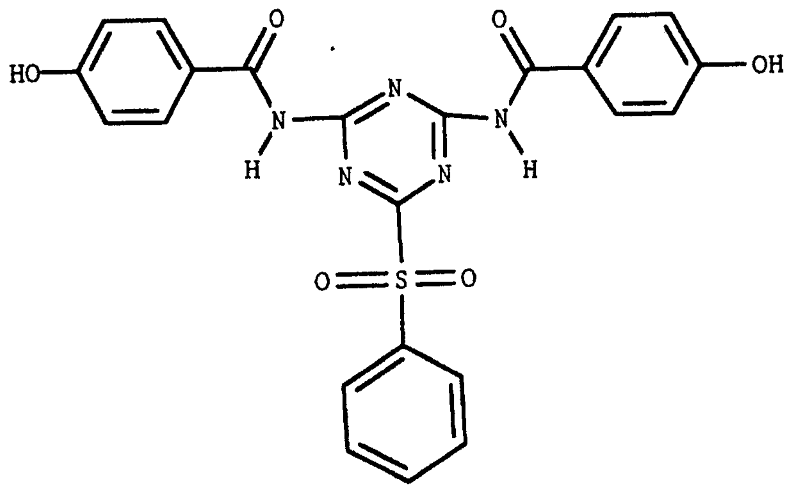

Compound of the formula (I) where n is 1 and X is -N= is for example the following:

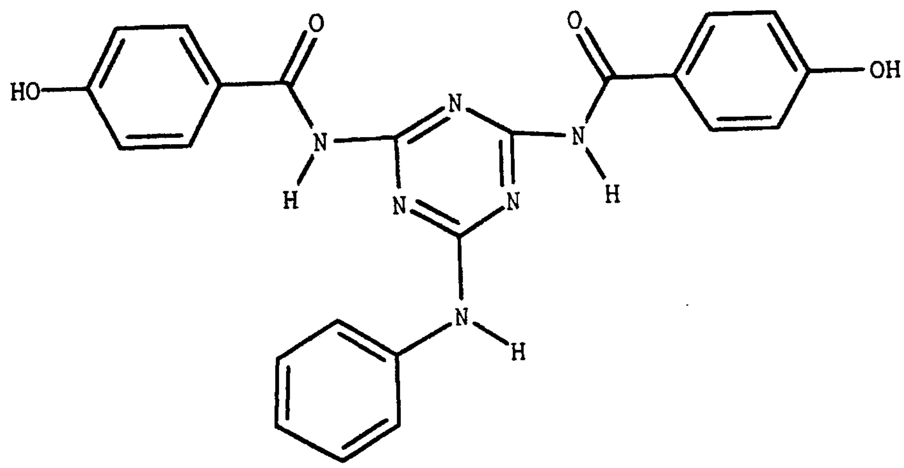

The thermotropic polyesters of the present invention may be produced by the usual methods of condensation or esterification of the reactive starting monomers, for example by reaction in the melt, in suspension or in a slurry as described in the prior art.

The process to be used to form the polyesters of this invention depends on the polyester to be synthesized. Preferably a condensation reaction is applied; the reaction of the monomers takes place between 50¤C and 350¤C, preferably in an inert atmosphere such as nitrogen or argon, followed by a polycondensation reaction, at increased temperature and reduced pressure, which results in a polycondensate with the desired degree of polymerization. It is possible, but not absolutely essential, to effect the condensation or esterification and the polycondensation reaction in the presence of a catalyst. Several non-limiting examples of suitable catalysts include Lewis acids, organic or inorganic acids, complexes or mixed salts of alkali metals or alkaline earth metals, for example magnesium and calcium, or vanadium, manganese, cobalt, titanium, zinc, nickel, lanthanum, cerium, zirconium or of elements such as germanium, tin, lead and antimony, or the alkali and alkaline earth metals themselves, such as sodium. More specific examples are sodium hydroxyde, lithium acetate, sodium acetate, potassium acetate, calcium acetate, magnesium acetate, cobalt acetate, zinc acetate, calcium benzoate, magnesium acetylacetonate, zinc acetylacetonate, vanadium-alkoxides, titanium alkoxides, such as titanium phenolate, zirconium propylate, zirconium butylate, sodium phenolate, germanium dioxide, antimony dioxide, dialkyl and diaryltinoxide,

dibutyltin diacetate, and dibutyldimethoxytin. Magnesium, manganese, sodium, potassium and/or zinc acetates are preferred. The catalyst is preferably used in amounts up to maximum 1% by weight with respect to the total weight of the monomers used.

Once the reaction rate of the condensation or esterification has decreased, the polymerization mixture is, if so desired, maintained under vacuum (± 0,1 mbar) at increased temperature for one or more hours. The product ohtained is ground after having been cooled. Preferably the ground product is post-condensed for 5 to 30 hours at a temperature of 200 to 400¤C.

The invention is additionally illustrated by the following examples. It should be understood, however, that the invention is not limited to the specific details of the examples.

Example 1

Into a reactor equipped with a stirrer, a nitrogene inlet and a reflux condensor are added 850 g acetic acid anhydride. Additionally, 456,5 g (3,2 mole) p-hydroxy-benzoic acid (99%), 269,1 (1,6 mole) terephthalic acid (99%), 286,1 g (1,52 mole) p,p′-bisphenol (99%), 36,3 g (0,08 mole) of a compound having the structure

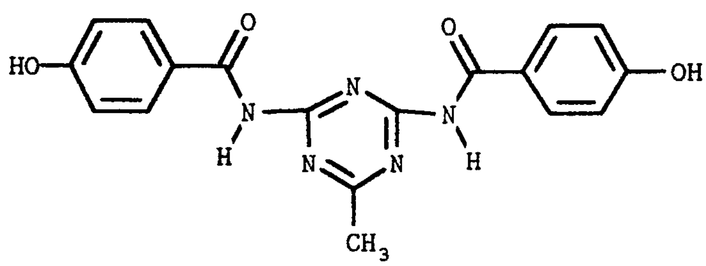

and 1 g potassium diacetate are added.

The obtained suspension under stirring is heated to reflux at a temperature of 155¤C. Then the reflux condensor is replaced by a distilling condensor and the temperature is raised to 315¤C at a rate of 46¤C/hour and kept constant at this figure until a conversion of 90 to 95% has been achieved.

After cooling to room temperature the obtained polymer is ground and after condense during 12 hours at 330¤C.

The properties of the obtained thermotropic polymer are as follows:

Melting temperature ($T_m$) = 355¤C (obtained by DSC).

E-modul (ASTM D790, 3,2 mm): 13.200 N/mm$^2$

The polymer exhibits a heat distortion temperature (HDT) above 300¤C. Due to the fact that the temperature range of the apparatus, in which the HDT is measured, is limited to a maximum of 300¤C the HDT could not be determined.

Example 2

According to the method as described in example 1 446,5 g (3,2 mole) p-hydroxybenzoic acid (99 %), 260,1 g (1,6 mole) terephthalic acid (99%), 286,1 g (1,52 mole) p,p′-biphenol (99%), 36,3 g (0,08 mole) of the compound having the structure

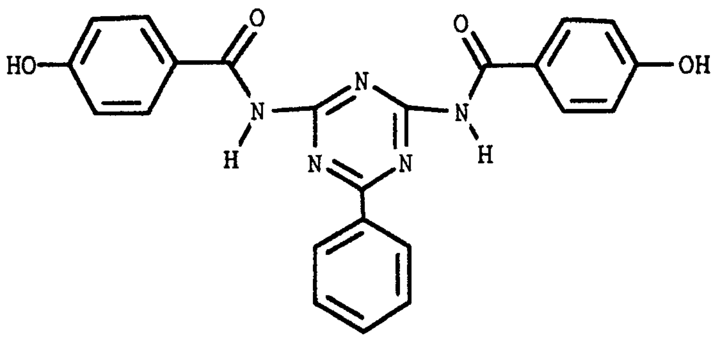

and 1 g potassium diacetate are reacted. After cooling to room temperature the obtained polymer is ground and aftercondensed at a temperature of 320¤C during 12 hours.

The properties of the obtained polymer are as follows:

Melting temperature ($T_m$) = 340¤C

E-modul (ASTM, 3,2 mm): 12.500 $M/mm^2$

The polymer exhibits a heat distortion temperature (HDT) above 300¤C. Due to the fac that the temperature range of the apparatus, in which the HDT is measured, is limited to a maximum of 300¤C the HDT could not be determined.

## Claims

1. Thermotropic polyester of units of diacids, hydroxy acids, diols, and optionally polyestercarbonate-, polyesteramide-, polyesterimide-and/or polyester anhydride-structures, characterized in that a part of the diol component (s) is replaced by one or more dervative(s) of the following formula (I)

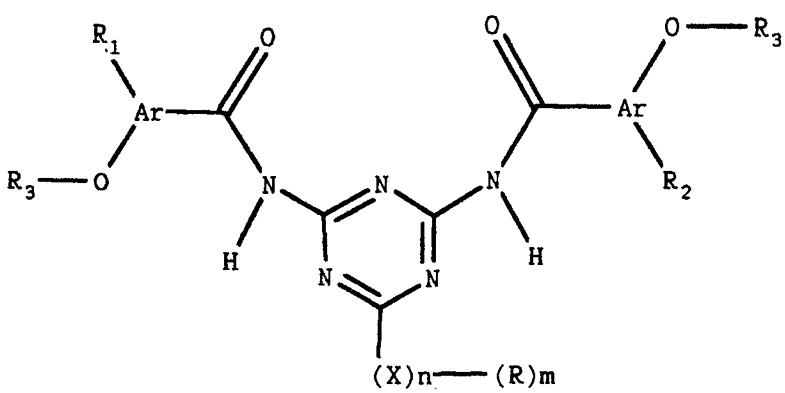

wherein

R, $R_1$ and $R_2$ which are the same or different, are hydrogen, alkyl radicals having 1 to 4 carbon atoms, cycloalkyl radicals having 3 to 6 carbon atoms, or aryl radicals, optionally substituted by one or more alkyl radicals having 1 to 4 carbon atoms, or substituted by halogen atoms like chlorine, bromine and/or fluorine,

$R_3$ is hydrogen or an akyl radical having 1 to 4 carbon atoms,

n is 0 or 1 and if n = 1, then

X is -O-, $-SO_2-$, or -N =, whereas m = 1 or 2;

Ar is phenyl, biphenyl or naphthyl.

2. Thermotropic polyesters according to claim 1, wherein the units of the derivate(s) of the formula I replace(s) 0,5 to 50% by weight of the diol(s).

3. Thermotropic polyesters according to the claim 1 or 2, wherein in the derivatives of the formula I

R is methyl or phenyl,

$R_1$ and $R_2$ are hydrogen,

n is O, and
Ar is phenyl, or, if
n is 1, X is - N =.

4. Thermotropic polyesters according to anyone of the claims 1 to 3, wherein the diol component is biphenol, the diacid component is terephthalic acid and/or isophthalic acid, and the hydroxy acid component is p-hydroxy benzoic acid.

5. Thermotropic polyesters according to anyone the claims 1 to 4, wherein

a) the amount of the units derived from the diol component(s) is to 5 to 40 wt.%,

b) the amount of the units derived from the diacid compound(s) is 5 to 40 wt.% and

c) the amount of the units derived from the hydroxy acid component(s) is 20 to 90 wt.%, the total amount being 100 wt.%.

6. Thermotropic polyesters according to claim 5 wherein 1 to 10% by weight of the total amount of (a) to (c) are replaced by units of carbonate-, sulphone-, urethane-, imide-, ether-, keto-, urea-, sulphide-, azo-, anhydride-, and/or thioestergroups.

7. Object wholly or partially made from the thermotropic polyester as described in anyone of the claim 1-6.

8. Fiber wholly or partially made from the thermotropic polyester as described in anyone of the claim 1-6.

European Patent Office

# EUROPEAN SEARCH REPORT

Application Number

EP 90 20 1937

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 12, no. 479 (C-552)(3326), 14 December 1988; & JP-A-63196626 (MITSUBISHI RAYON CO. LTD.) 15.08.1988<br>* the whole abstract * | 1 | C 08 G 63/68<br>C 08 G 69/44<br>C 09 K 19/38<br>C 08 K 5/34 |
| A | DE-A-1 495 141 (BASF AG)<br>* claim * | 1 | |
| A | US-A-3 772 250 (J. ECONOMY et al.)<br>* claims 1,2 * | 1 | |
| A | DE-A-2 744 566 (CIBA-GEIGY AG)<br>* claim 1 * | 1 | |
| A | JMS-REV. MACROMOL. CHEM. PHYS. vol. C-26, no. 4, 1986, pages 551-650; S.K. VARSHNEY: "Liquid Crystalline Polymers: A Novel State of Material"<br>* pages 565-567, table 1; page 562, last paragraph * | 1 | TECHNICAL FIELDS SEARCHED (Int. Cl.5) |
| P,A | EP-A-0 376 380 (STAMICARBON B.V.)<br>* claim 1 * | 1 | C 08 G<br>C 09 K |

The present search report has been drawn up for all claims

| Place of search | Date of completion of the search | Examiner |
|---|---|---|
| BERLIN | 29-10-1990 | VOIGTLAENDER R O J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document